Europäisches Patentamt

European Patent Office

Office européen des brevets

(11) Publication number: **0 291 121 B1**

(12) EUROPEAN PATENT SPECIFICATION

(45) Date of publication of patent specification: **26.08.92**

(51) Int. Cl.⁵: **H01J 29/76**, H01J 29/00, H05K 9/00, G12B 17/02

(21) Application number: **88200879.0**

(22) Date of filing: **04.05.88**

(54) Picture display device with stray field compensation means.

(30) Priority: **11.05.87 NL 8701109**

(43) Date of publication of application:
**17.11.88 Bulletin 88/46**

(45) Publication of the grant of the patent:
**26.08.92 Bulletin 92/35**

(84) Designated Contracting States:
**AT DE ES FR GB IT NL SE**

(56) References cited:
**EP-A- 0 220 777**
**DE-A- 3 631 023**
**JP-A-62 082 632**
**JP-A-62 082 633**
**JP-A-62 093 842**

(73) Proprietor: **N.V. Philips' Gloeilampenfabrieken**
**Groenewoudseweg 1**
**NL-5621 BA Eindhoven(NL)**

(72) Inventor: **Bosch, Gerrit**
**c/o INT. OCTROOIBUREAU B.V. Prof. Holst-laan 6**
**NL-5656 AA Eindhoven(NL)**
Inventor: **Pasma, Tjebbe Rinse**
**c/o INT. OCTROOIBUREAU B.V. Prof. Holst-laan 6**
**NL-5656 AA Eindhoven(NL)**
Inventor: **Sluyterman, Albertus Aemilius Seyno**
**c/o INT. OCTROOIBUREAU B.V. Prof. Holst-laan 6**
**NL-5656 AA Eindhoven(NL)**
Inventor: **Doomernik, Franciscus Maria Petrus Pius**
**c/o INT. OCTROOIBUREAU B.V. Prof. Holst-laan 6**
**NL-5656 AA Eindhoven(NL)**
Inventor: **Wielink, Steven Maria**
**c/o INT. OCTROOIBUREAU B.V. Prof. Holst-laan 6**
**NL-5656 AA Eindhoven(NL)**

(74) Representative: **Koppen, Jan et al**
**INTERNATIONAAL OCTROOIBUREAU B.V.**
**Prof. Holstlaan 6**
**NL-5656 AA Eindhoven(NL)**

## Description

The invention relates to a picture display device having a display tube the rear part of which comprises a cylindrical neck accommodating a device for generating electron beams whilst the front part is funnel-shaped, the widest part being provided on the front side and comprising a display phosphor screen, said display device also being provided with an electromagnetic deflection unit mounted around part of the display tube for deflecting electron beams across the display screen and comprising a line deflection coil and a field deflection coil, and with a compensation coil system comprising at least one compensation coil for generating at least a magnetic dipole field, which compensation coil system is oriented in such manner and in operation is energisable in such manner that, measured at a predetermined distance from the operative display device, the magnetic (interference) field generated by the line deflection coil is at least partly compensated.

A picture display device of this type having means for compensating (line deflection coil) stray fields is known from EP-A 220777.

Recently more stringent standards have been introduced for certain types of picture display devices, notably for monitors, with respect to the magnetic interference field which they may produce around them. An important source of magnetic interference fields is the line deflection coil because it is operated at radio frequency currents (frequencies in the range of 10 to 100 kHz) as contrasted to the field deflection coil. It is impossible to design a satisfactorily operating deflection coil that produces no stray field. If the stray field were to be eliminated by means of a protective shield, such a shield would only be effective if the combination of display tube and deflection unit were also shielded on the display screen side. The above-cited patent application describes the use of a compensation coil system for eliminating the line deflection stray field at a larger distance, which system, when energized, generates a compensating magnetic dipole field. This dipole field can be obtained by energising one coil whose turns are mainly in one flat plane (a current loop), which coil has the correct number of turns, the correct surface area and the correct orientation. The fact that the spatial position of the compensating dipole moment deviates from that of the deflection unit (which is positioned more to the front) makes little difference at a larger distance (> 3 m). Energising can be effected by arranging the compensation coil in series with or parallel to the line deflecting coil. This dipole field can be obtained in an alternative manner by energising two current loops which are positioned on the outside of the line deflection coil with two main portions of their length extending at least approximately parallel to the tube axis on facing sides thereof, which current loops have the correct number of turns, the correct surface area and the correct orientation. Energising may also be effected to arranging the compensation coils formed by the current loops in series with or parallel to the line deflection coil. For a compensation at smaller distances (for example, 0.5 m from the deflection unit) it is desirable to generate also a compensating fourpole field with the compensation coil system. This fourpole field can be generated, for example, by means of two coils or coil portions which are positioned symmetrically relative to the plane of symmetry of the line deflection coils and perpendicularly to the tube axis.

It has been calculated that the radiation field of a line deflection coil at a distance of 0.5 m can be suppressed, for example, by a factor of 20 with a compensation coil system generating a dipole-fourpole field, thus just complying with the current requirements.

It has been found that a compensation coil system dimensioned and energised in order to realise the above-described effect often suppressed the radiation field by not more than a factor of 10, that is to say, only a partial compensation occurred after the system had been placed on a combination of display tube and deflection coil.

The object of the invention is to provide measures which ensure a more complete compensation of the radiation field of the line deflection coil.

According to the invention this object is solved in that the device of the type described in the opening paragraph has a compensation coil system which is electrically connected (in series with or parallel to) the line deflection coil, and is provided with electric means shift the phase of the current through the, or at least one compensation coil with respect to the phase of the current through the line deflection coil.

The invention is based on the recognition that metal parts are present in a display tube. These may be both plate-shaped parts such as protective shields and layer-shaped parts such as a layer of an electrically conducting material (for example, Al) provided across the phosphor screen on the inside of the display tube. The field which is not yet compensated at the area of the said metal parts produces eddy currents therein which generate a secondary magnetic field. This secondary field is (90 degrees) out of phase with the primary field and at 0.5 m from the deflection unit it is approximately equally strong as the compensated field. The measures according to the invention ensure that a current component flows through at least a part of the compensation coil system which is also (90 degrees) out of phase with the component flowing through the line deflection coil. This ensures a more complete compensation. Phase shift can be realised, for example, by arranging an electric resistor in parallel. If the compensation coils not only have a self-induction but also a significant resistivity, it is useful to arrange a capacitor in series with the parallel resistor. This results in the 90° shifted component being realised over a large frequency range.

For display tubes having a homogeneous aluminium coating of the phosphor screen it appears that a reduction factor of 20 can indeed be realised. However, in some types of display tubes the A1 layer does not provide a homogeneous coating. The parallel arrangement of one single resistor with the compensation coil system does not appear to lead to quite the desired result. The same may occur if other metal parts in the display tube such as the protective shield, have an asymmetrical surface area. In order to achieve a compensation which is also as complete as possible in these situations, it is advantageous if according to a embodiment of the invention the compensation coil system comprises a plurality of (series-arranged) compensation coils, whilst at least one compensation coil constitutes a parallel arrangement with an electric resistor.

When using the above-described measure it is possible to ensure a compensation which is as complete as possible, dependent on the specific geometry of the interfering asymmetrical metal parts in the display tube, by providing one or more parallel resistors between different points of the series-arranged compensation coils. If the monitor instead of the tube has many conducting elements, it may be useful to arrange a resistor (possible with a capacitor) in parallel with the deflection coil. The compensation coil system may be composed in different manners. It may comprise a first set of two compensation coils for generating a dipole compensation field, which coils are positioned symmetrically with respect to the plane of symmetry of the line deflection coil and extend with main portions of their lengths in the axial direction (and are preferably connected in a series arrangement). To provide the possibility of compensation at smaller distances, the compensation coil system may further comprise a second set of two compensation coils for generating a fourpole compensation field, which coils are positioned symmetrically with respect to the plane of symmetry of the line deflection coil and extend with main portions of their lengths transversely to the axial direction (and are preferably connected in a series arrangement).

Dependent on the effect which is to be achieved, for example, the compensation coils of the first and seconds sets which are positioned on the same side of the plane of symmetry of the line deflection coil may be connected in series and constitute a parallel arrangement with one electric resistor, or the compensation coils of the first and second sets which are positioned on different sides of the plane of symmetry of the line deflection coil may constitute a parallel arrangement with one electric resistor.

The compensation coils are preferably large in order to reduce their energy content.

However, a problem is that many types of display devices (particularly monitors) lack the space to accommodate large coil systems in their correct positions. Consequently, relatively small (too small) compensation coils must be used so that the radiation compensation consumes much (line deflection) energy. The space available for the coils extending with main portions of their lengths transversely to the axial direction is particularly insufficient if they have to be placed closer to the display screen.

In a further embodiment of the picture display device according to the invention this problem is mitigated in that the compensation coils of the first and/or the second set each comprise at least two sub-coils placed parallel to each other at a predetermined distance. The effect thereof will be described hereinafter.

Some embodiments of the invention will now be described with reference to the accompanying drawings in which

Fig. 1a is a perspective elevational view of a picture display device having a display tube provided with an electromagnet deflection unit,

Fig. 1b shows diagrammatically an electromagnetic deflection unit with a line deflection coil,

Fig. 1c is a perspective elevational view of a picture display device having a display tube provided with an electromagnetic deflection unit, and a compensation coil,

Fig. 2 is a perspective rear view of a display tube on which two sets of compensation coils are provided,

Fig. 3 shows diagrammatically a coil-tube combination in a longitudinal cross-section with two sets of compensation coils,

Fig. 4 is a perspective rear view of a display tube with one set of single and one set of double compensation coils,

Fig. 5 is a diagrammatic plan view of a compensation coil half with three windows,

Fig. 6, 7, 8 and 9 show (parts of) circuit arrangements for connecting compensation coils within the scope of the invention.

Fig. 1a is a perspective elevational view of a combination of a deflection unit and a display tube placed in a cabinet 12 which according to the invention can be provided with means for compensating interference fields. For the sake of clarity all details which are unimportant for understanding the invention have been omitted.

The display tube has a cylindrical neck 1 and a funnel-shaped portion 3, the widest part of which is present on the front side of tube and comprises a display screen (not shown).

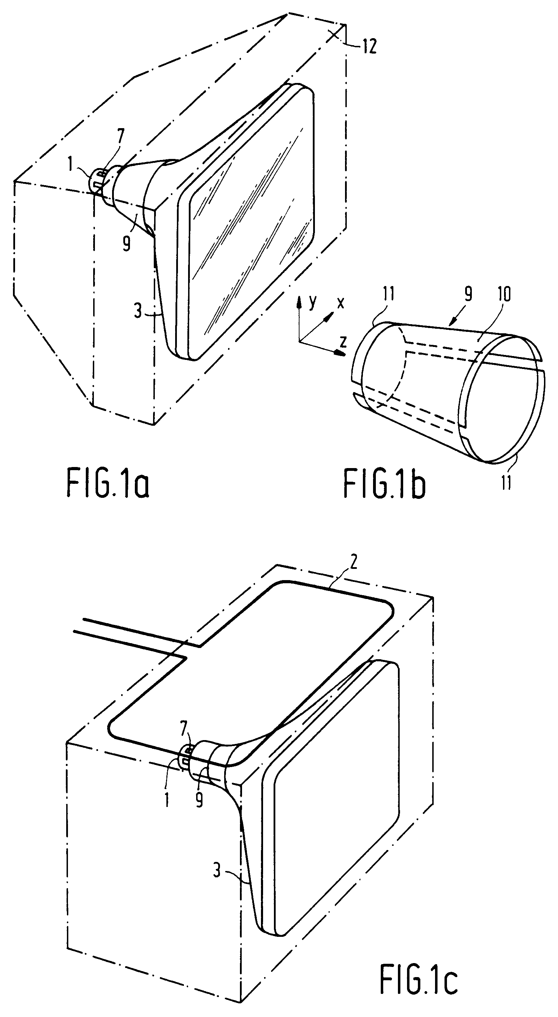

The display screen comprises phosphors which upon impingement by electrons luminesce in a predetermined colour. The rear part of the neck 1 accommodates an electron gun system 7 (shown diagrammatically). At the area of transition between the neck 1 and the funnel-shaped portion 3 an electromagnetic deflection unit 9 diagrammatically shown is provided on the tube, which unit comprises, inter alia, a line deflection coil 11 (Fig. 1b) for deflecting the electron beams in the horizontal direction x. As is diagrammatically shown in Fig. 1b, the line deflection coil 11 may comprise, for example two saddle-shaped coil halves which are positioned on either side of a plane of symmetry (the x-z plane). In the operating condition a sawtooth current having a frequency of between 10 and 100 kHz, for example, a frequency of approximately 64 kHz is passed through these coils. Generally the line deflection coil 11 is surrounded by an annular core element 10 of a soft magnetic material, the so-called yoke ring which is also shown diagrammatically in Fig. 1b.

When the radiation field of a line deflection coil having a yoke ring is initially equally large but opposed to that of a coil without a yoke ring, the line deflection coil can be assumed for large distances to be a current loop having a given magnetic moment.

The field $B_o$ in the centre of a line deflection coil without a yoke ring can be calculated to be approximately 30 Gauss. The field of a practical deflection coil having a yoke ring has approximately twice this value.

The line deflection coil field at 1 m distance is approximately 1 mGauss.

This radiation field can be compensated with the aid of an auxiliary loop current having a low nI value and a large radius such that the magnetic moment is the same as that of the coil itself. Such an auxiliary loop current can be generated by means of a compensation loop having a radius $R_c$ = 20 cm and a number of turns $n_c$ = 4. Thus a reduction of 40 dB can be realised at, for example, a distance of 3 m and more from the radiation source. The orientation of the compensation loop is to be such that the magnetic dipole moment generated upon current passage through this coil at a predetermined distance (for example 3m) compensates the magnetic dipole moment of the interfering component. To this end the dipole moment of the compensation loop should be parallel to and oppositely directed relative to the dipole moment of the interfering component. The interfering component of the line deflection coil in the first place. Also the line output transformer may generate, for example, an interference field and can then be considered as an interfering component. In that case it applies that:

Parallel dipole moments originating from one or more components can be compensated with one current loop. Non-parallel dipole moments can be compensated with one loop when the frequency and the phase of the dipole moments to be compensated are the same.

Thus it is possible to compensate the magnetic stray fields of a device, comprising a plurality of directly interfering sources (line output stage, deflection coil) and a plurality of indirect sources ("reflectors", baseplates) with the aid of a compensation loop having a limited number of turns and a given diameter. Such a loop (compensation coil) is denoted by the reference numeral 2 in Fig. 1c.

By choosing the number of turns to be low and the surface area to be large, the following conditions can generally be satisfied:

1. the magnetic dipole moment vector is equal to the sum of the dipole moments of all direct sources in the device.

2. The load on the supply and the interference on the components in the device itself (notably the deflection coil) is sufficiently small.

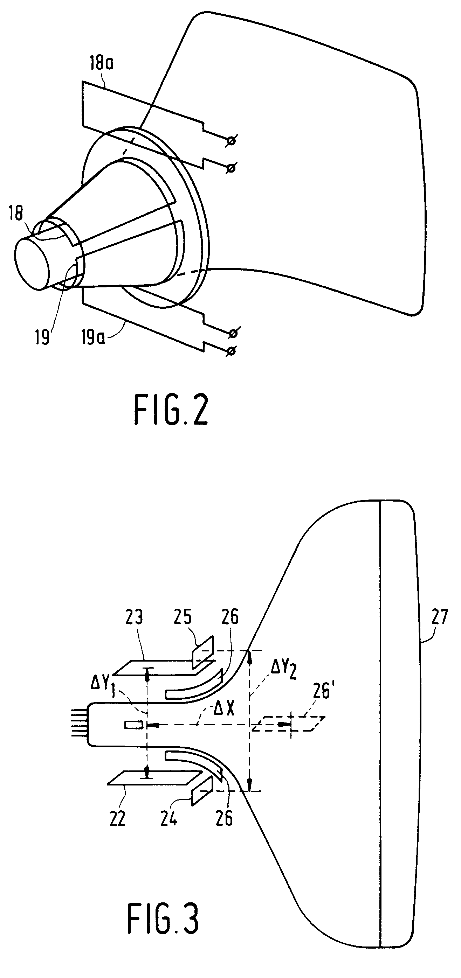

Fig. 2 shows a deflection unit with two sets of compensation coils, a first set 18, 19 extending with main portions of their lengths in the axial direction for generating a dipole compensation field and a second set 18a, 19a extending with main portions of their lengths transversely to the axial direction for generating a fourpole compensation field. By correctly choosing the number of turns of the first set and of the second set and by correctly choosing both the current directions and the dimensions of the first and second sets, a considerably field reduction can already be realised at distances of approximately 50 cm. As regards the correct choice of the current directions this notably implies that upon energisation of the compensation coil system the currents in the first parts flow in the same direction as the currents in the corresponding (axial) parts of the line deflection coil and the currents in the second parts flow in a direction which is opposed to the direction of the corresponding (transversal) parts of the line deflection coil.

The operation of the coil arrangement of Fig. 2 is elucidated with reference to Fig. 3. The interfering field of a line deflection coil 26 may be roughly considered to be a dipole in the tube 27 (= coil 26'). The compensation is effected with the coils 22 and 23 which are provided symmetrically relative to the plane of symmetry of the line deflection coil 26. However, due to the distance $\Delta Y_1$ between the coils 22 and 23 a 6-pole component is produced, and a 4-pole component is produced due to the distance $\Delta X$. If the coils 22, 23 are moved forwards (in order to reduce $\Delta X$ and hence the 4-pole), $\Delta Y_1$ increases and so does the 6-pole. Therefore $\Delta Y_1$ remains small; the 6-pole can be slightly reduced by enlarging the diameter of the coils 22 and 23, which, however, results in that $\Delta X$ must increase because the coils cannot project into the tube. Mainly a 4-pole field proportional to the size of the coils, the current through the coils and the distance $\Delta Y_2$ is generated with the two coils 24 and 25. A good combination of coil sizes and current intensities can neutralise the 4 and 6-poles. For the 8-poles it applies that all coils should not become so large that they are tangent to the measuring circle because then the 8-poles and even higher harmonics start playing a role.

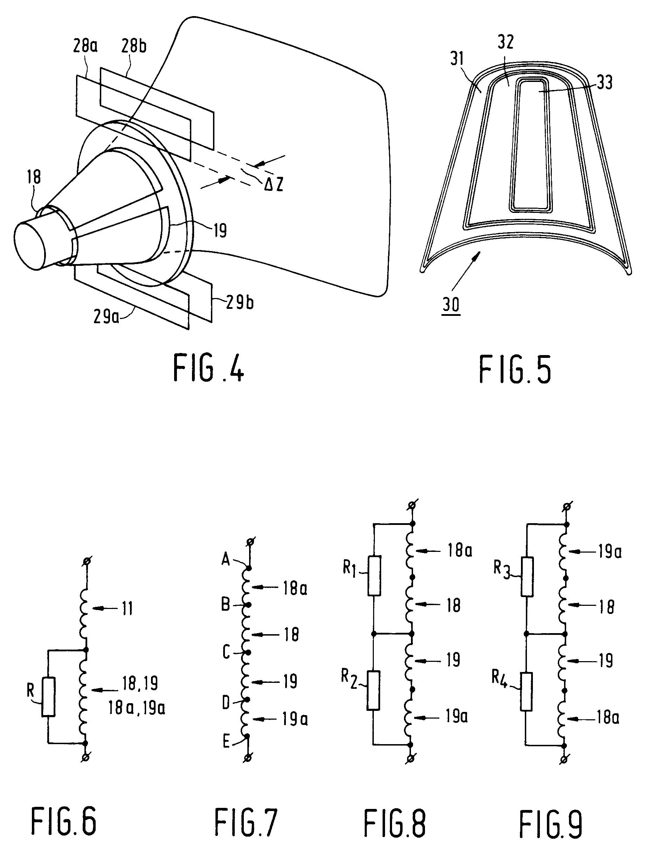

As already noted hereinbefore it is important for the compensation coils to be large in connection with their energy consumption. This is a problem, particularly with the coils of the second set. They can each be built up from at least two sub-coils (28a, 28b and 29a and 29b, respectively in Fig. 4). By placing the sub-coils of each pair at a predetermined distance ($\Delta Z$) from each other, it can be ensured that the mutual inductance is minimum. In the case of two sub-coils each sub-coil pair may have half the number of turns which would otherwise be required for a single coil. This means that the inductance of the system with two pairs of sub-coils may be half the inductance of a system of single coils. This results in a reduction of the energy content.

The saddle coils 18, 19 may be either of the self-supporting or of the so-called yoke winding type. This means that they are directly wound on a support. This support may have, for example, two grooved flanges which are secured to the front and rear sides of the deflection unit. The positions of the axially extending turn portions can be fixed by means of the grooves. For use in different deflection units, for example, universal flanges (with grooves uniformly distributed over the circumference) can be used to wind compensation coils with two or more coil windows of different sizes. In this way the "effective" compensation coil surface can be adapted to each line deflection coil with which the compensation coil is combined. Fig. 5 is a diagrammatic plan view of a compensation saddle coil half 30 with three coil windows 31, 32 and 33 of different size.

As already described hereinbefore the magnetic stray field of a deflection coil can be compensated by means of a system of compensation coils. A simple dipole correction is sufficient for the compensation at a large distance (for example 3 m). It is desirable to add a fourpole correction for compensation at small distances (for example, 0.5 m from the deflection coil). In both cases the required extra energy is greatly determined by the geometrical dimensions of the coils; the larger the coils, the smaller the required energy. With such a dipole-fourpole combination the radiation field at 0.5 m can be suppressed by a factor of, for example 20, just complying with the current requirements.

If the coil thus compensated is placed on a display tube whose inner side has an aluminium coating for the purpose of picture brightness, then it appears that the - at the area of this layer not yet compensated - field produces eddy currents which generate a magnetic secondary field. (Such eddy currents may also be produced in other plate-shaped metal parts such as protective shields in a display tube). This secondary field is 90° (with respect to time) out of phase with the primary field and at 0.5 m from the deflection coil it is approximately as strong as the compensated field. This means that the reduction factor of 20 is reduced by approximately 50 % so that the official standard is no longer complied with.

A solution has been found by arranging a resistor R in parallel with the system of compensation coils 18, 19, 19a, 19b, arranged in series with the deflection coil 11, see Fig. 6. The current through this resistor R is 90 degrees out of phase with the current flowing through the compensation coil system so that in this system a current component flows which is also 90 degrees out of phase with the current flowing through the deflection coil 11. The compensation is corrected thereby. In a given case R complied with, for example, 300 Ohm.

For the display tubes having a homogeneous aluminium coating the reduction factor of 20 can thus be restored again. In some types of picture tubes, however, the A1 layer appears to give no homogeneous coating so that the above-mentioned solution provides only a partial correction.

In order to restore the compensation also for these situations, the compensation coils system can be formed in such a manner that the dipole coil and the (possibly present) fourpole coil each comprise two symmetrical parts (18, 19 and 18a, 19a, see Fig. 7) which have connection points A, B, C, D and E. Coils 18 and 18a and 19 and 19a are those halves of the dipole coil and the fourpole coil which are positioned on the same side of the plane of symmetry of the deflection coil 11.

Dependent on the specific geometry of the interfering asymmetrical conductors in the display tube, the compensation can now be restored by providing one or more parallel resistors $R_1$, $R_2$ between different points of the circuit, see, for example Fig. 8. Alternatively the coils 18a and 19a can be electrically interchanged (geometrically they keep their position) and then one or more resistors $R_3$, $R_4$ can be provided, see Fig. 9. In a given case a value of, for example 150 Ohm each for $R_1$, $R_2$, $R_3$ and $R_4$ was sufficient.

## Claims

1. A picture display device having a display tube the rear part of which comprises a cylindrical neck accommodating a device for generating electron beams, whilst the front part is funnel-shaped, the widest part being provided on the front side and comprising a display phosphor screen, said display device also being provided with an electromagnetic deflection unit mounted around part of the display tube for deflecting electron beams across the display screen and comprising a line deflection coil and a field deflection coil, and with a compensation coil system comprising at least one compensation coil for generating at least a magnetic dipole field, which compensation coil system is oriented in such manner and in operation is energisable in such manner that, measured at a predetermined distance from the operative display device, the magnetic field generated by the line deflection coil is at least partly compensated, the compensation coil system being electrically connected to the line deflection coil, characterized in that the compensation coil system is provided with electric means to shift the phase of the current through the, or at least one compensation coil with respect to the phase of the current through the line deflection coil.

2. A picture display device as claimed in Claim 1, characterized in that the compensation coil system comprises a plurality of series-arranged compensation coils, whilst at least one compensation coil constitutes a parallel arrangement with an electric resistor.

3. A picture display device as claimed in Claim 2, characterized in that at least two compensation coils constitute a parallel arrangement with an electric resistor.

4. A picture display device as claimed in Claim 2, characterized in that the compensation coil system comprises a first set of two compensation coils for generating a dipole compensation field, which coils are positioned symmetrically with respect to the plane of symmetry of the line deflection coil and extend with main portions of their lengths in the axial direction.

5. A picture display device as claimed in Claim 4, characterized in that the compensation coil system also comprises a second set of two compensation coils for generating a fourpole compensation field, which coils are positioned symmetrically with respect to the plane of symmetry of the line deflection coil and extend with main portions of their lengths transversely to the axial direction.

6. A picture display device as claimed in Claim 5, characterized in that the compensation coils of the first and second sets which are positioned on the same side of the plane of symmetry of the line deflection coil are connected in series and constitute a parallel arrangement with one electric resistor.

7. A picture display device as claimed in Claim 5, characterized in that the compensation coils of the first and second sets which are positioned on different sides of the plane of symmetry of the line deflection coil are connected in series and constitute a parallel arrangement with one electric resistor.

8. A picture display device as claimed in Claim 4 or 5, characterized in that the two compensation coils of the first and/or the second set each comprise at least two sub coils placed parallel to each other at a predetermined distance.

9. A picture display device as claimed in Claim 2, 3, 6 or 7, characterized in that a capacitor is arranged in series with the resistor.

10. A picture display device as claimed in Claim 1, characterized in that a resistor, possibly with a capacitor in series, is arranged parallel to the line deflection coil.

## Patentansprüche

1. Bildwiedergabeanordnung mit einer Wiedergaberöhre, deren rückwärtiger Teil einen zylindrischen Hals umfaßt, in dem eine Anordnung zum Erzeugen von Elektronenstrahlen angeordnet ist, und die Vorderseite trichterförmig ist, deren breitester Teil sich an der Vorderseite befindet und einen Wiedergabe-Leuchtschirm enthält, wobei die Wiedergabeanordnung ebenfalls mit einer elektromagnetischen Ablenkeinheit versehen ist, die zum Ablenken von Elektronenstrahlen über den Wiedergabeschirm um einen Teil der Wiedergaberöhre angebracht ist und eine Horizontalablenkspule sowie eine Vertikalablenkspule enthält, und mit einem Ausgleichsspulensystem, das wenigstens eine Ausgleichsspule zum Erzeugen wenigstens eines magnetischen Dipolfeldes enthält, und das Ausgleichsspulensystem derart orientiert und im Betrieb derart anregbar ist, daß bei der Messung in vorgegebenem Abstand von der im Betrieb befindlichen Wiedergabeanordnung das von der Horizontalablenkspule erzeugte Magnetfeld wenigstens teilweise ausgeglichen wird, und das Ausgleichsspulensystem mit der Horizontalablenkspule elektrisch verbunden ist, dadurch gekennzeichnet, daß das Ausgleichsspulensystem zum Drehen der Phase des Stroms durch die oder wenigstens eine Ausgleichsspule gegen die Phase des Stroms durch die Horizontalablenkspule mit elektrischen Mitteln versehen ist.

2. Bildwiedergabeanordnung nach Anspruch 1, dadurch gekennzeichnet, daß das Ausgleichsspulensystem eine Anzahl reihengeschalteter Ausgleichsspulen enthält, und daß wenigstens eine Ausgleichsspule aus einer Parallelschaltung mit einem elektrischen Widerstand besteht.

3. Bildwiedergabeanordnung nach Anspruch 2, dadurch gekennzeichnet, daß wenigstens zwei Ausgleichsspulen eine Parallelschaltung mit einem elektrischen Widerstand bilden.

4. Bildwiedergabeanordnung nach Anspruch 2, dadurch gekennzeichnet, daß das Ausgleichsspulensystem eine erste Gruppe von zwei Ausgleichsspulen zum Erzeugen eines Dipolausgleichsfeldes enthält, und diese Spulen gegen die Symmetrieebene der Horizontalablenkspule symmetrisch angeordnet sind und sich mit Hauptteilen ihrer Längen in der axialen Richtung erstrecken.

5. Bildwiedergabeanordnung nach Anspruch 4, dadurch gekennzeichnet, daß das Ausgleichsspulensystem weiter eine zweite Gruppe von zwei Ausgleichsspulen zum Erzeugen eines Vierpolausgleichsfeldes enthält, und diese Spulen gegen die Symmetrieebene der Horizontalablenkspule symmetrisch angeordnet sind und sich mit Hauptteilen ihrer Längen quer zur axialen Richtung erstrecken.

6. Bildwiedergabeanordnung nach Anspruch 5, dadurch gekennzeichnet, daß die Ausgleichsspulen der ersten und zweiten Gruppen, die an derselben Seite der Symmetrieebene der Horizontalablenkspule angeordnet sind, in Reihe geschaltet sind und eine Parallelschaltung mit nur einem elektrischen Widerstand bilden.

7. Bildwiedergabeanordnung nach Anspruch 5, dadurch gekennzeichnet, daß die Ausgleichsspulen der ersten und zweiten Gruppen, die an verschiedenen Seiten der Symmetrieebene der Horizontalablenkspule angeordnet sind, in Reihe geschaltet sind und eine Parallelschaltung mit nur einem elektrischen Widerstand bilden.

8. Bildwiedergabeanordnung nach Anspruch 4 oder 5, dadurch gekennzeichnet, daß die zwei Ausgleichsspulen der ersten und/oder der zweiten Gruppe je wenigstens zwei in vorgegebenem Abstand parallel zueinander angeordnete Unterspulen enthalten.

9. Bildwiedergabeanordnung nach Anspruch 2, 3, 6 oder 7, dadurch gekennzeichnet, daß in Reihe mit dem Widerstand ein Kondensator angeordnet ist.

10. Bildwiedergabeanordnung nach Anspruch 1, dadurch gekennzeichnet, daß ein Widerstand möglicherweise in Reihenschaltung mit einem Kondensator zur Horizontalablenkspule parallelgeschaltet ist.

**Revendications**

1. Dispositif de reproduction d'images présentant un tube image dont la partie arrière comporte un col cylindrique dans lequel est disposé un dispositif d'engendrement de faisceaux à électrons, la partie avant ayant la forme d'un entonnoir, la partie la plus large étant prévue sur la face avant et comportant un écran de substance luminescente, ledit dispositif de reproduction d'images étant également pourvu d'une unité de déviation électromagnétique montée autour d'une partie du tube image pour dévier des faisceaux à électrons sur l'écran et comportant une bobine de déviation de ligne et une bobine de déviation de trame, le dispositif de reproduction d'images comportant également un système de bobine de compensation comportant au moins une bobine de compensation pour engendrer au moins un champ bipolaire magnétique, ce système de bobine de compensation étant orienté et pouvant être activé lors de son fonctionnement d'une telle manière que, mesuré par rapport à une distance prédéterminée du dispositif de reproduction d'images en fonctionnement, le champ magnétique engendré par la bobine de déviation de ligne soit compensé au moins partiellement, le système de bobine de compensation étant connecté électriquement à la bobine de déviation de ligne, caractérisé en ce que le système de bobine de compensation est pourvu de moyens électriques pour effectuer le décalage de phase du courant traversant la bobine de compensation ou une bobine de compensation au moins par rapport à la phase du courant traversant la bobine de déviation de ligne.

2. Dispositif de reproduction d'images selon la revendication 1, caractérisé en ce que le système de bobine de compensation comporte plusieurs bobines de compensation disposées en série, une bobine de compensation au moins constituant un montage en parallèle avec une résistance électrique.

3. Dispositif de reproduction d'images selon la revendication 2, caractérisé en ce qu'au moins deux bobines de compensation constituent un montage en parallèle avec une résistance électrique.

4. Dispositif de reproduction d'images selon la revendication 2, caractérisé en ce que le système de bobine de compensation comporte une première série de deux bobines de compensation pour engendrer un champ de compensation bipolaire, ces bobines étant positionnées symétriquement par rapport au plan de symétrie de la bobine de déviation de ligne et s'étendant en direction axiale avec les parties principales de leur longueur.

5. Dispositif de reproduction d'images selon la revendication 4, caractérisé en ce que le système de bobine de compensation comporte également une deuxième série de deux bobines de compensation pour engendrer un champ de compensation quadripolaire, ces bobines étant positionnées symétriquement par rapport au plan de symétrie de la bobine de déviation de ligne et s'étendant transversalement à la direction axiale avec les parties principales de leur longueur.

6. Dispositif de reproduction d'images selon la revendication 5, caractérisé en ce que les bobines de compensation des première et deuxième séries, positionnées du même côté du plan de symétrie de la bobine de déviation de ligne, sont connectées en série et constituent un montage en parallèle avec une résistance électrique.

7. Dispositif de reproduction d'images selon la revendication 5, caractérisé en ce que les bobines de compensation des première et deuxième séries positionnées sur des côtés différents du plan de symétrie de la bobine de déviation de ligne sont connectées en série et constituent un montage en parallèle avec une résistance électrique.

8. Dispositif de reproduction d'images selon la revendication 4 ou 5, caractérisé en ce que les deux bobines de compensation de la première et/ou deuxième série comportent chacune au moins deux sous-bobines placées parallèlement l'une à l'autre et à une distance prédéterminée.

9. Dispositif de reproduction d'images selon la revendication 2, 3, 6 ou 7, caractérisé en ce qu'un condensateur est monté en série avec la résistance.

10. Dispositif de reproduction d'images selon la revendication 1, caractérisé en ce qu'une résistance, éventuellement avec un condensateur monté en série, est montée en parallèle avec la bobine de déviation de ligne.

FIG.1a

FIG.1b

FIG.1c

FIG.2

FIG.3

10

FIG.4

FIG.5

FIG.6

FIG.7

FIG.8

FIG.9